# EUROPÄISCHE PATENTSCHRIFT

(11) **EP 3 436 713 B1**
(45) Veröffentlichungstag und Bekanntmachung des Hinweises auf die Patenterteilung: **18.11.2020**
(21) Anmeldenummer: 17715896.1
(22) Anmeldetag: 06.03.2017
(51) Int. Cl.: F16D 13/75

(54) **VERSCHLEISSKOMPENSATIONSEINRICHTUNG MIT VORFIXIERTEM GEWINDESTIFT UND KUPPLUNG**
WEAR COMPENSATION DEVICE HAVING A PRE-FIXED THREADED PIN AND CLUTCH
DISPOSITIF DE COMPENSATION D'USURE COMPRENANT UNE TIGE FILETÉE FIXÉE AU PRÉALABLE ET EMBRAYAGE

(30) Priorität: 31.03.2016 DE 102016205355
(43) Veröffentlichungstag der Anmeldung: 06.02.2019
(73) Patentinhaber: Schaeffler Technologies AG & Co. KG, 91074 Herzogenaurach (DE)
(72) Erfinder: BIRK, Michael, 77815 Bühl (DE); HECK, Roman, 77815 Bühl (DE)
(86) Internationale Anmeldenummer: PCT/DE2017/100175
(87) Internationale Veröffentlichungsnummer: WO 2017/167326

(56) Entgegenhaltungen:
- DE-A1-102011 102 846
- DE-T2- 69 613 932
- US-A- 6 152 274

## Beschreibung

Die Erfindung betrifft eine Verschleißkompensationseinrichtung für eine Kraftfahrzeugkupplung, etwa nach Art einer wegnachstellenden Verschleissausgleichseinrichtung, wie sie in einer Travel Adjusted Clutch (TAC) einsetzbar ist. Sie ist mit einer Antriebsfeder versehen, die zum Antreiben eines Ritzels vorgesehen ist, wobei über das Ritzel eine verschleißkompensierende Drehbewegung eines rampenaufweisenden Verstellrings hervorrufbar / bewirkbar ist, wobei eine Sondermutter fest angebracht ist, innerhalb derer ein abstandseinstellender / abstandshaltender Gewindestift, etwa nach Art einer Madenschraube, eingeschraubt ist und dabei eine Gewindeverbindung zwischen der Sondermutter und dem Gewindestift vorhanden ist.

Aus dem Stand der Technik sind bereits Reibungskupplungen und Verschleißkompensationseinrichtungen / Verschleißnachstelleinrichtungen bekannt. So offenbart bspw. die WO 2009/056092 A1 eine Reibungskupplung, die zumindest ein Kupplungsgehäuse mit einer daran drehfesten und axial begrenzt verlagerbaren Druckplatte besitzt, die von einem sich am Kupplungsgehäuse abstützenden Hebelsystem mit einer entgegen der Wirkung von zwischen dem Kupplungsgehäuse und der Druckplatte wirksame Energiespeicher mit einer Anpresskraft gegenüber einer deckelfest angeordneten Anpressplatte unter Verspannung von Reibbelägen einer Kupplungsscheibe beaufschlagbar ist. Es wird dort ein Verschleiß der Reibbeläge kompensiert, indem ein entstehender erster Abstand zwischen einer Anpressplatte und dem Hebelsystem mittels einer Verdrehung eines zwischen der Anpressplatte und dem Hebelsystem angeordneten Rampensystems mittels einer Verdreheinrichtung dann ausgeglichen wird, wenn bei vom Hebelsystem mit maximal kraftbeaufschlagter Druckplatte ein zweiter vorgegebener Abstand zwischen der Druckplatte und dem Kupplungsgehäuse ermittelt wird, der einen vorgegebenen Wert überschreitet, und es dann danach eine Verdrehung gibt, während der eine Entlastung der Druckplatte durch das Hebelsystem und eine Verlagerung der Druckplatte mittels der zwischen der Druckplatte und dem Kupplungsgehäuse wirksamen Energiespeicher erfolgt.

Reibungskupplungen mit weggesteuerten Verschleißkompensationseinrichtungen sind auch aus der DE 10 2010 045 791 A1 bekannt. Dort wird eine Reibungskupplung aufweisend ein Gehäuse mit einer drehfest und axial begrenzt zu dieser verlagerbar angeordneten Anpressplatte offenbart, die von einem sich am Kupplungsgehäuse abstützenden Hebelsystem gegenüber einer gehäusefest angeordneten Gegendruckplatte unter Verspannung von Reibbelägen einer Kupplungsscheibe axial verlagert, wobei bei Unterschreiten eines bei verspannten Reibbelägen gebildeten Abstands zwischen der Anpressplatte und der Druckplatte ein Formschluss zwischen einem mit einer Spindel eines an der Anpressplatte angeordneten Spindeltriebs zum Drehantrieb eines zwischen der Anpressplatte und dem Hebelsystem angeordneten Verstellrings verbundenen Ritzel und einer am Gehäuse befestigten Antriebsklinke gebildet wird und während einer Betätigungsbewegung der Anpressplatte gegenüber dem Gehäuse nach einem Verdrehen des Ritzels mittels Anpressklinke gelöst wird. Um eine Nachstelleinrichtung der Reibungskupplung mit axial geringem Bauraum und einer einfachen Montage zu erreichen, wurde damals vorgeschlagen, die Antriebsklinke aus einem mit dem Gehäuse elastisch verbundenen, außerhalb des Gehäuses radial angeordneten Befestigungsteil und einem dem Formschluss mit dem Ritzel bildenden, das Gehäuse axial durchgreifenden Antriebsteil auszuformen.

Kupplungsvorrichtungen der ähnlichen Art sind auch aus der DE 10 2012 213 658 A1 bekannt. Dort wird eine Kupplungsvorrichtung mit zumindest einer in axialer Richtung ein- und ausrückbaren, im eingerückten Zustand reibschlüssigen Drehmomentübertragungseinrichtung und zumindest einer Verschleißnachstelleinrichtung offenbart, die auch zumindest einen drehbaren Verstellring, zumindest einen auf den Verstellring wirkenden, drehbar gelagerten Spindeltrieb mit einem eine Zahnstruktur aufweisenden Antriebsritzel, sowie zumindest eine mit der Zahnstruktur des Antriebsritzels in Eingriff bringbare Antriebsklinke zur Drehung des Spindeltriebs im Verschleißfall besitzt, wobei die Antriebsklinke zumindest einen Seitenabschnitt aufweist, der mit einem von der Zahnstruktur verschiedenen Bereich des Antriebsritzels in Anlage bringbar ist.

Auch aus einer noch recht jungen Patentanmeldung, nämlich der DE 10 2015 210 020 ist eine Reibungskupplung und ein Verfahren zur Einstellung des Betriebspunktes der Reibungskupplung bekannt. Dort wird nämlich eine Reibungskupplung zum Kuppeln einer Antriebswelle eines Kraftfahrzeugmotors mit mindestens einer Getriebeeingangswelle eines Kraftfahrzeuggetriebes mit einer Gegenplatte vorgestellt, wobei die Reibungskupplung eine relativ zur Gegenplatte axial verlagerbare Anpressplatte zum reibschlüssigen Verpressen einer Kupplungsscheibe zwischen der Gegenplatte und der Anpressplatte besitzt. Ferner ist sie mit einer Nachstelleinrichtung zum Nachstellen eines verschleißbedingten Fehlabstandes der Anpressplatte zur Gegenplatte versehen, wobei die Nachstelleinrichtung eine Antriebsfeder zum Ermitteln des verschleißbedingten Fehlabstandes der Anpressplatte zur Gegenplatte aufweist. Ferner ist ein Einstellelement, zur Einstellung des Betriebspunktes der Reibungskupplung und eine Sicherung zum Konstant halten des von dem Einstellelement eingestellten Betriebspunktes der Reibungskupplung vorhanden, wobei die Sicherung durch eine Verformung des Einstellelements selber erfolgt. Das Einstellelement kann als Einstellschraube ausgebildet sein. Die Sicherung zum Konstant halten des eingestellten Betriebspunktes der Reibungskupplung erfolgt durch eine teilweise Verformung des Gewindes der Einstellschraube. Es ist offenbart, dass zum Zerstören des Gewindes der Einstellschraube im Verzahnungsbereich ein Laser eingesetzt wird.

Wie schon aus diesen genannten Druckschriften bzgl. der Entwicklung des Standes der Technik hervorgeht, sind wegnachstellende Kupplungen (TAC) in den letzten Jahren stark weiterentwickelt worden: Es wird üblicherweise ein beschichteter Gewindestift in eine Sondermutter eingeschraubt, welche in einer Antriebsfeder vernietet ist, wobei diese wiederum auf einem Kupplungsdeckel vernietet aufliegt und die Funktion hat, ein Ritzel anzutreiben, sobald ein Verschleiß an der Kupplungsscheibe entsteht. Der Gewindestift weist dabei eine klemmende Beschichtung auf, die beim Einschrauben eine Klemmwirkung hervorruft, sodass ein Losdrehen des Gewindestifts verhindert wird. Die klemmende Beschichtung ist bzgl. der Streuung des Einschraubdrehmomentes jedoch sehr empfindlich, sodass es teilweise zu Ausschuss bzw. zu Nacharbeit der Serie kommen kann. Es wird daher dazu übergegangen ein verbessertes Verfahren mittels Aufschmelzen durch Laser bis zur Serienreife einzusetzen und dadurch zunehmend die klemmende Beschichtung zu ersetzen.

Nach der Montage wird nach wie vor aber die wegnachstellende Kupplung (TAC) auf eine bestimmte Ausrückkraft eingestellt, wobei erst im Anschluss daran die finale Fixierung des Gewindestifts durch das besagte Aufschmelzen mittels eines Lasers erfolgt. Das Gewinde wird dabei zerstört. Das bedeutet, dass nach dem Einstellen der TAC der Gewindestift bis zur Fixierung, durch eine nicht vorhandene Klemmung zwischen dem Gewindestift und der Mutter aber infolge des Wegfalls der Beschichtung leider verdreht werden kann, wodurch sich die Position und damit die TAC wieder verstellen kann. Dies ist jedoch ungewünscht.

Es ist daher die Aufgabe der vorliegenden Erfindung, die Nachteile aus dem Stand der Technik zu vermeiden und insbesondere ein ungewolltes Verdrehen des Gewindestifts nach dem Einstellvorgang auszuschließen. Dabei sollen solch kostengünstige Mittel eingesetzt werden, die auch einfach zu montieren sind. Weiter soll eine Möglichkeit aufgezeigt werden, den Gewindestift bis zum finalen Fixieren, welches durch ein Aufschmelzen erfolgen kann, in seiner Position zu halten, also vorzufixieren. Der eingestellte Bolzenabstand soll sich also bis zur Fixierung durch bspw. ein Aufschmelzen eben gerade nicht mehr ändern.

Diese Aufgabe wird bei einer gattungsgemäßen Verschleißkompensationseinrichtung dadurch gelöst, dass zumindest ein Abschnitt der Gewindeverbindung mechanisch deformiert ist. Es bietet sich hierzu eine Druckeinbringung oder eine Krafteinbringung an. Ein Verpressen oder Verdrücken ist wünschenswert.

Die Sondermutter, welche in einer Antriebsfeder vernietbar ist, wird also so verformt, dass eine integrierte mechanische Selbstsicherung entsteht und damit der Gewindestift beim Losdrehen bis zum finalen Fixieren durch Aufschmelzen an einer ungewollten Drehung gehindert ist.

Mit anderen Worten ist die Konstruktion durch eine mechanische Verformung, etwa eine Prägung der Sondermutter, insbesondere eine integrierte Selbstsicherung, beispielsweise durch ein Prägen mittels derer die ersten Gewindegänge eingedrückt werden, sodass es zur Klemmwirkung mit dem Gegenstück / Gewindestift kommt, gekennzeichnet. Ferner ist das Klemmmoment durch die Tiefe des Eindrucks gezielt einstellbar, sobald mit einer normalen Momentstreuung zu rechnen ist, was dann positive Auswirkungen hat. Ein Losdrehen des Gewindestiftes ist ausgeschlossen. Die Selbstsicherung ist bauraumneutral. Sie ist ferner temperaturbeständig und temperaturneutral. Die Vorfixierung lässt sich in (nur) einem (einzigen) Montageschritt oder in zumindest zwei Montageschritten, die voneinander verschieden sind, realisieren. Durch eine Vorfixierung wird der Gewindestift zusätzlich zur Fixierung durch Aufschmelzen gesichert. Eine doppelte Absicherung gegen ein Losdrehen wird erreicht.

Das Hervorrufen / die Gestaltung der mechanischen Verformung kann durch ein Eindrücken von außen auf die Sondermutter realisiert werden. Als Eindruck bietet sich das Verwenden eines trilobularen Werkzeugs, also eines kreisförmigen Werkzeugs mit 120° zueinander in Umfangsrichtung versetzten Erweiterungen an. Auch drei voneinander getrennte Balken auf der Außenseite eines Presswerkzeuges bieten sich an.

Durch eine Vorfixierung des Gewindestifts mittels einer mechanisch integrierten Selbstsicherung ergeben sich also die Vorteile, dass ein Losdrehen des Gewindestifts bis zur finalen Fixierung durch Aufschmelzen ausgeschlossen ist, eine doppelte Absicherung gegen ein Verdrehen des Gewindestifts geschaffen ist und dass die Vorfixierung bauraum- und temperaturneutral ausgeführt ist.

Vorteilhafte Ausführungsformen sind in den Unteransprüchen beansprucht und werden nachfolgend näher erläutert.

So ist es von Vorteil, wenn eine Deformation, also insbesondere die mechanische Deformation, an Gewindeflanken der Sondermutter und/oder des Gewindestifts eingebracht ist. Natürlich sind auch mehrere Deformationen möglich. Die Taktzeiten während des Fertigens können dann kurz gehalten werden.

Es ist zweckmäßig, wenn sich die Deformationen über ein Winkelsegment von ca. 40° bis ca. 60° erstreckt oder mehrere dieser Winkelsegmente, vorteilhafterweise drei entlang der Umfangsrichtung gleichverteilte Winkelsegmente vorhanden sind. Dabei können auch wieder Winkelsegmente von jeweils ca. 40 bis ca. 60°, bspw. ca. 50° eingeschlossen werden.

Es hat sich bewährt, wenn die Deformation in Axialrichtung der Sondermutter / des Gewindestifts ein- / aufgebracht ist. Die mechanische Deformation kann also von außen oder von innen eingebracht werden. Dabei können Radial- und/oder Axialbewegung kombiniert werden.

Wenn die Sondermutter an einem distalen Ende mechanisch deformiert ist, etwa gestaucht, verpresst oder geplättet ist, vorzugsweise wenigstens zwei Gewindeflanken desselben Gewindes sich annähernd oder sogar in Kontakt miteinander verbringend verändert sind, so kann einerseits zwar ein Einschrauben zum Einstellen ermöglicht werden, andererseits aber ein ungewolltes Verstellen des Gewindestifts relativ zur Sondermutter aufgrund der Widerstands- / Reibungserhöhung unterbunden werden.

Ferner ist es von Vorteil, wenn die Deformation als ein Balken oder eine trilobulare Form ausgebildet ist. Werkzeuge, die dann über lange Zeit ohne Qualitätsverlust nutzbar sind, können dann eingesetzt werden. Die Qualität des Produkts wird dann höher.

Es hat sich auch bewährt, wenn der Gewindestift aus härterem Material als die Sondermutter ausgebildet ist.

Die Erfindung betrifft auch eine (Reibungs-)Kupplung, wie eine Einfach- oder eine Doppelkupplung, für einen Antriebsstrang eines Kraftfahrzeuges, wie eines Pkws, eines Lkws oder eines anderen Nutzfahrzeuges, mit einer Verschleißkompensationseinrichtung der erfindungsgemäßen Art.

Insbesondere ist auch ein Montageverfahren einer Verschleißkompensationseinrichtung und natürlich auch einer Kupplung offenbart, mit einer antriebsfederfesten Sondermutter, die in ein antriebsfestes Bauteil, wie die Antriebsfeder selber oder eine Vorspannfeder, eingenietet wird, wobei in die Sondermutter ein Gewindestift eingeschraubt wird und während des Einnietens der Sondermutter oder danach und/oder während des Einschraubens des Gewindestifts in die Sondermutter eine Deformation in eine Gewindeverbindung zwischen der Sondermutter und dem Gewindestift mechanisch eingebracht wird, ergo mit mechanischen Mitteln. Also wird eine mechanische Deformation erzwungen.

Um das vibrationsbedingte Ein- oder Ausdrehen des Gewindestifts, der auch als Madenschraube bezeichnet werden kann, in die Sondermutter hinein oder aus der Sondermutter heraus zu verhindern, bevor das Gewinde von der Sondermutter und/oder der Schraube durch einen Laserstrahl zerstört wird, wird also eine mechanische Schraubensicherung vorgeschlagen. Diese kann beim Einpressen der Sondermutter in die Antriebsklinke hergestellt werden bzw. hergestellt sein, bevor die Madenschraube eingedreht wird. Auch eine Herstellung der mechanischen Schraubensicherung unmittelbar nach dem Eindrehen der Madenschraube ist denkbar.

Die Erfindung wird nachfolgend mit Hilfe einer Zeichnung näher erläutert. Dabei sind unterschiedliche Ausführungsbeispiele dargestellt.
- In Fig. 1: ist eine teilweise quergeschnittene perspektivische Darstellung eines Ausschnitts durch eine erfindungsgemäße Kupplung im Bereich der Verschleißkompensationseinrichtung dargestellt, wobei eine Antriebsfeder mit einer Sondermutter und einem Gewindestift fixiert ist,
- Fig. 2: eine weitere perspektivische teilweise quergeschnittene Darstellung durch eine Kupplung mit Verstellmechanik,
- Fig. 3: die erfindungsgemäße Verstellmechanik in einer leicht gedrehten, vergrößerten Darstellung,
- Fign. 4 bis 7: einen Querschnitt durch die Kupplung während des Vernietens der Sondermutter mit der Antriebsfeder bei Bearbeitung von oben (Fign. 4 und 5) und "Prägen" der Sondermutter bei Bearbeitung von unten (Fign. 6 und 7),
- Fig. 8: eine perspektivische Draufsicht auf jene einer Sondermutter zugewandten Seite eines ersten Presswerkzeuges, und
- Fig. 9: eine zur Fig. 8 vergleichbare Darstellungsweise auf ein zweites Werkzeug.

Die Figuren sind lediglich schematischer Natur und dienen nur dem Verständnis der Erfindung. Die gleichen Elemente sind mit denselben Bezugszeichen versehen. Merkmale der einzelnen Ausführungsbeispiele können untereinander ausgetauscht werden.

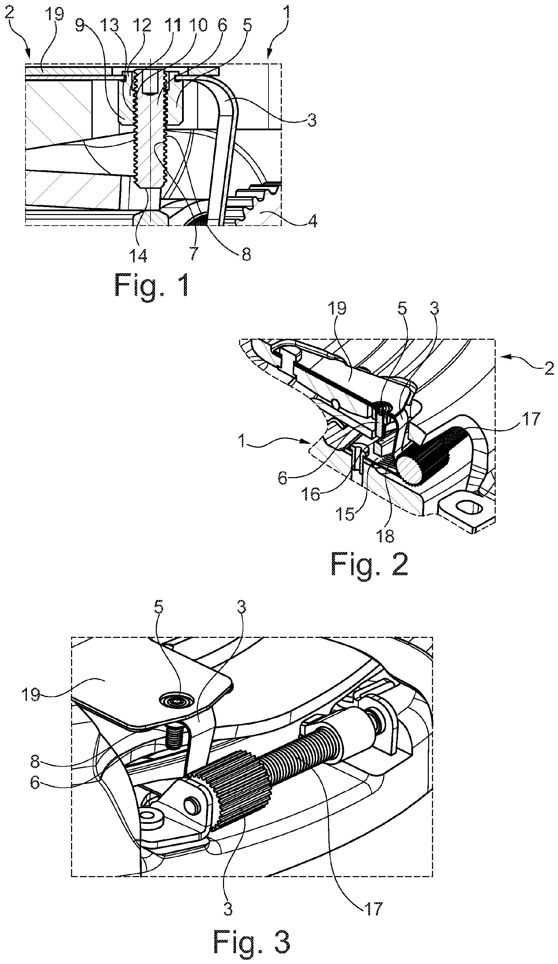

In Fig. 1 ist eine erste Ausführungsform einer erfindungsgemäßen Verschleißkompensationseinrichtung 1 im Ausschnitt dargestellt. Sie ist Teil einer nicht näher dargestellten Kraftfahrzeugkupplung 2. Es ist eine Antriebsfeder 3 vorhanden. Die Antriebsfeder 3 ist genutzt, um ein Ritzel 4 anzutreiben.

In die Antriebsfeder 3 ist eine Sondermutter 5 eingenietet. In die Sondermutter 5 ist zentrisch ein Gewindestift 6 nach Art einer Madenschraube eingeschraubt. Dabei weist die Sondermutter 5 ein Innengewinde 7 auf. Der Gewindestift 6 weist ein Außengewinde 8 auf. Das Innengewinde 7 wird durch Gewindeflanken gebildet, genauso wie das Außengewinde 8 durch Gewindeflanken gebildet wird. Die Gewindeflanken der beiden Bauteile stehen in einem Unterteil 9 der Sondermutter 5 miteinander in Eingriff und bilden eine Gewindeverbindung 10. Oberhalb des Unterteils 9 weist die Sondermutter 5 ein Oberteil 11 auf, das ohne ein Innengewinde 7 versehen ist, aber auf der Außenseite einen Hintergriff 12 realisiert.

Es gibt einen Deformationsbereich 13, in dem die Gewindeverbindung 10 mechanisch deformiert ist. Dort sind die Gewindeflanken entweder des Innengewindes 7 oder des Außengewindes 8 oder beide jeweiligen Gewindeflanken verbogen / verformt / verplättet / verpresst und/oder verwunden.

Während der mit mechanischen Mitteln bewirkte Deformationsbereich 13 im Übergang vom Unterteil 9 zum Oberteil 11 vorhanden sein kann, kann er auch am unterteilfernen Ende des Oberteils 11 oder dazwischen, insbesondere mittig dazwischen, angeordnet sein.

Eine Unterseite 14 des Gewindestifts 6 ist zum in Anschlag gelangen / Kontaktieren eines Verstellrings 15 oder einer Anpressplatte vorgesehen. Am Verstellring 15, siehe insbesondere Fig. 2, sind Rampen 16 vorhanden. Wie auch in Fig. 2 zu erkennen ist, ist das Ritzel 4 mit einer Spindel 17 fest verbunden. Ferner werden Sperrklinken 18 eingesetzt, um eine ungewollte Gegenrotation des Ritzels 4 zu unterbinden.

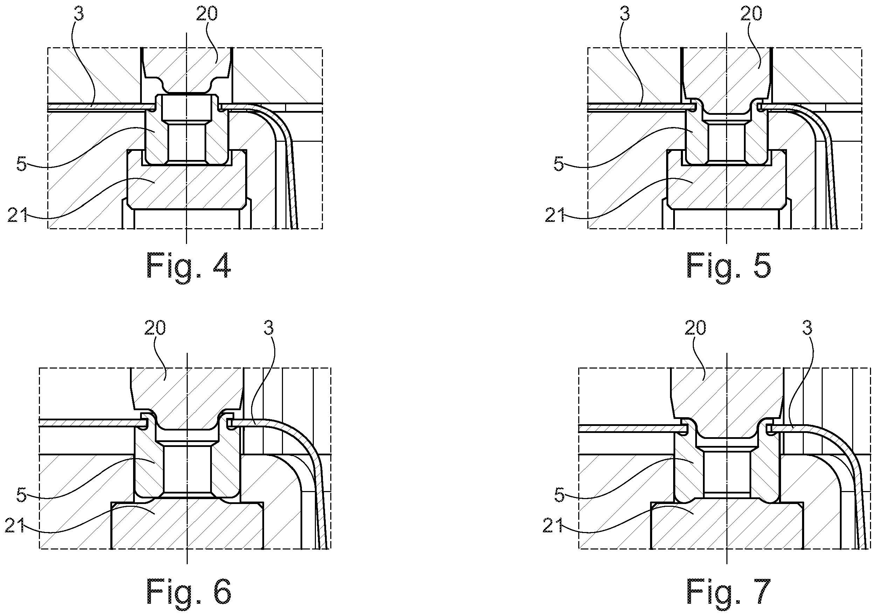

In den Fign. 1 bis 3 ist auch immer eine Vorspannfeder 19 gut zu erkennen, die plattenartig ausgestaltet ist. Das erreichen der Deformation an der Sondermutter 5 ist in den Fign. 4 bis 6 dargestellt. Während des Verfahrens, das in den Fign. 4 bis 5 zum Zeitpunkt der Montage dargestellt ist, findet ein "Vernieten" der Sondermutter 5 mit der Antriebsfeder von oben statt. Dazu abweichend findet ein "Prägen" der Sondermutter 5 von unten in jenem alternativen Verfahren, wie es in den Fign. 6 und 7 dargestellt ist, statt.

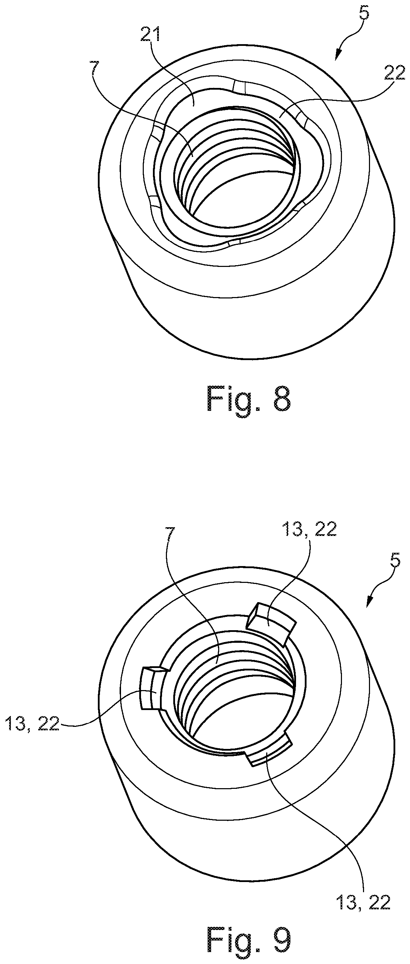

Jene dabei eingesetzten Werkzeuge 20 oder 21 können dabei einen Eindruck auf der Sondermutter 5 hinterlassen, wie er in den Fign. 8 und 9 dargestellt ist. So sind unterschiedliche Deformationen 22 einbringbar.

In der Ausführungsform der Fig. 8 ist nämlich eine zusammenhängende Deformation 22 nach Art einer trilobularen Form vorhanden, wohingegen die Sondermutter 5 der Figur 9 so verändert, insbesondere mechanisch gestaucht wurde, dass sich drei voneinander getrennte Deformationsbereiche 13 mit jeweils einer Deformation 22 ausbilden. Jede Deformation 22 ist dabei balkenartig ausgebildet, jedoch mit einer leicht bogenförmigen Ausgestaltung versehen, die dem Umfang bzw. der Umfangsrichtung der Sondermutter 5 folgt.

### Bezugszeichenliste

- 1: Verschleißkompensationseinrichtung / Verschleißnachstelleinrichtung
- 2: Kraftfahrzeugkupplung
- 3: Antriebsfeder
- 4: Ritzel / Stirnrad
- 5: Sondermutter
- 6: Gewindestift
- 7: Innengewinde
- 8: Außengewinde
- 9: Unterteil der Sondermutter
- 10: Gewindeverbindung
- 11: Oberteil der Sondermutter
- 12: Hintergriff
- 13: Deformationsbereich
- 14: Unterseite des Gewindestifts
- 15: Verstellring
- 16: Rampe
- 17: Spindel
- 18: Sperrklinke
- 19: Vorspannfeder
- 20: erstes Werkzeug
- 21: zweites Werkzeug
- 22: Deformation

## Patentansprüche

1. Verschleißkompensationseinrichtung (1) für eine Kraftfahrzeugkupplung (2) mit einer Antriebsfeder (3), die zum Antreiben eines Ritzels (4) vorgesehen ist, wobei über das Ritzel (4) eine verschleißkompensierende Drehbewegung eines rampenaufweisenden Verstellringes (15) bewirkbar ist, wobei eine Sondermutter (5) antriebsfederfest angebracht ist, innerhalb derer ein abstandseinstellender Gewindestift (6) eingeschraubt ist, wobei dabei eine Gewindeverbindung (10) zwischen der Sondermutter (5) und dem Gewindestift (6) vorhanden ist, **dadurch gekennzeichnet, dass** zumindest ein Abschnitt der Gewindeverbindung (10) mechanisch deformiert ist.

2. Verschleißkompensationseinrichtung (1) nach Anspruch 1, **dadurch gekennzeichnet, dass** eine Deformation (22) an Gewindeflanken der Sondermutter (5) und/oder des Gewindestifts (6) angebracht ist.

3. Verschleißkompensationseinrichtung (1) nach Anspruch 2, **dadurch gekennzeichnet, dass** sich die Deformation (22) nur über ein Winkelsegment von ca. 40° bis ca. 60° erstreckt oder mehrere dieser Winkelsegmente vorhanden sind.

4. Verschleißkompensationseinrichtung (1) nach Anspruch 2 oder 3, **dadurch gekennzeichnet, dass** die Deformation (22) in Axialrichtung der Sondermutter (5) ein- / aufgebracht ist.

5. Verschleißkompensationseinrichtung (1) nach einem der Ansprüche 2 bis 4, **dadurch gekennzeichnet, dass** die Deformation (22) eine Einbalkenform beinhaltet oder die Deformation (22) als eine trilobulare Form ausgebildet ist.

6. Verschleißkompensationseinrichtung (1) nach einem der Ansprüche 1 bis 5, **dadurch gekennzeichnet, dass** die Sondermutter (5) an einem distalen Ende mechanisch deformiert ist.

7. Verschleißkompensationseinrichtung (1) nach einem der Ansprüche 1 bis 6, **dadurch gekennzeichnet, dass** der Gewindestift (6) aus härterem Material als die Sondermutter (5) ausgebildet ist.

8. Kupplung (2) für einen Antriebsstrang, mit einer Verschleißkompensationseinrichtung (1) nach einem der vorhergehenden Ansprüche.

## Claims

1. A wear compensation device (1) for a motor vehicle clutch (2) having a drive spring (3) which is provided for driving a pinion (4), wherein a wear-compensating rotational movement of an adjustment ring (15) having ramps can be brought about via the pinion (4), wherein a special nut (5) is attached such that it is fixed to the drive spring, within which a distance-adjusting threaded pin (6) is screwed, wherein a threaded connection (10) between the special nut (5) and the threaded pin (6) is thereby provided, **characterised in that** at least one section of the threaded connection (10) is mechanically deformed.

2. The wear compensation device (1) according to claim 1, **characterised in that** a deformation (22) is fixed to the thread flanks of the special nut (5) and/or the threaded pin (6).

3. The wear compensation device (1) according to claim 2, **characterised in that** the deformation (22) only extends over an angular segment of approx. 40° to approx. 60° or a plurality of these angular segments are provided.

4. The wear compensation device (1) according to claim 2 or 3, **characterised in that** the deformation (22) is inserted/fixed in the axial direction of the special nut (5).

5. The wear compensation device (1) according to any one of claims 2 to 4, **characterised in that** the deformation (22) contains a single-bar shape or the deformation (22) is designed as a trilobular shape.

6. The wear compensation device (1) according to any one of claims 1 to 5, **characterised in that** the special nut (5) is mechanically deformed at a distal end.

7. The wear compensation device (1) according to any one of claims 1 to 6, **characterised in that** the threaded pin (6) is made from a harder material than the special nut (5).

8. A clutch (2) for a drive train, having a wear compensation device (1) according to any one of the preceding claims.

## Revendications

1. Dispositif de compensation d'usure (1) pour un embrayage de véhicule à moteur (2) comprenant un ressort d'entraînement (3), lequel est conçu pour entraîner un pignon (4), dans lequel, au moyen du pignon (4), un mouvement rotatif de compensation d'usure d'une bague de réglage (15) comportant une rampe peut être effectué, dans lequel un écrou spécial (5) est fixé au ressort d'entraînement, à l'intérieur duquel une tige filetée (6) destinée au réglage de la distance est vissée, dans lequel un raccordement fileté (10) est présent entre l'écrou spécial (5) et la tige filetée (6), **caractérisé en ce qu'**au moins une section du raccordement fileté (10) est mécaniquement déformée.

2. Dispositif de compensation d'usure (1) selon la revendication 1, **caractérisé en ce qu'**une déformation (22) est appliquée sur les flancs filetés de l'écrou spécial (5) et/ou de la tige filetée (6).

3. Dispositif de compensation d'usure (1) selon la revendication 2, **caractérisé en ce que** la déformation (22) ne s'étend que sur un segment angulaire d'environ 40 ° à environ 60 ° ou plusieurs de ces segments angulaires sont présents.

4. Dispositif de compensation d'usure (1) selon la revendication 2 ou 3, **caractérisé en ce que** la déformation (22) est incorporée/appliquée dans la direction axiale de l'écrou spécial (5).

5. Dispositif de compensation d'usure (1) selon l'une quelconque des revendications 2 à 4, **caractérisé en ce que** la déformation (22) comprend une forme de barre unique ou la déformation (22) est conçue à la manière d'une forme trilobée.

6. Dispositif de compensation d'usure (1) selon l'une quelconque des revendications 1 à 5, **caractérisé en ce que** l'écrou spécial (5) est mécaniquement déformé à une extrémité distale.

7. Dispositif de compensation d'usure (1) selon l'une quelconque des revendications 1 à 6, **caractérisé en ce que** la tige filetée (6) est conçue en une matière plus dure que l'écrou spécial (5).

8. Embrayage (2) pour une chaîne cinématique, comprenant un dispositif de compensation d'usure (1) selon l'une quelconque des revendications précédentes.
